(19) Europäisches Patentamt
European Patent Office
Office européen des brevets

(11) Numéro de publication : **0 477 343 B1**

(12) # FASCICULE DE BREVET EUROPEEN

(45) Date de publication du fascicule du brevet : **01.09.93 Bulletin 93/35**

(51) Int. Cl.$^5$ : **B01J 21/18,** B01J 20/20, C04B 35/54

(21) Numéro de dépôt : **91908252.9**

(22) Date de dépôt : **11.04.91**

(86) Numéro de dépôt international : **PCT/FR91/00303**

(87) Numéro de publication internationale : **WO 91/15292 17.10.91 Gazette 91/24**

(54) **COMPOSITE ACTIF ET SON UTILISATION COMME MILIEU REACTIONNEL.**

(30) Priorité : **11.04.90 FR 9004660**

(43) Date de publication de la demande : **01.04.92 Bulletin 92/14**

(45) Mention de la délivrance du brevet : **01.09.93 Bulletin 93/35**

(84) Etats contractants désignés : **AT BE CH DE DK ES FR GB GR IT LI LU NL SE**

(56) Documents cités :
**EP-A- 0 129 473**
**DE-A- 3 628 096**
**GB-A- 1 194 766**

(73) Titulaire : **SOCIETE NATIONALE ELF AQUITAINE**
**Tour Elf, 2, Place de la Coupole, La Défense 6**
**F-92400 Courbevoie (FR)**
Titulaire : **Le Carbone-Lorraine S.A.**
**41, rue Jean-Jaurès, B.P. 148**
**F-92231 Gennevilliers (FR)**

(72) Inventeur : **MAURAN, Sylvain**
**16, rue Nationale**
**F-66600 Espira-de-l'Agly (FR)**
Inventeur : **LEBRUN, Michel**
**2, rue des Sureaux**
**F-66000 Perpignan (FR)**
Inventeur : **PRADES, Philippe**
**31, rue Jardin-d'Enfants**
**F-66000 Perpignan (FR)**
Inventeur : **MOREAU, Michel**
**7, rue Fourier**
**F-92110 Clichy (FR)**
Inventeur : **SPINNER, Bernard**
**23, avenue Joffre**
**F-66200 Corneilla-del-Vercol (FR)**
Inventeur : **DRAPIER, Claude Résidence du Bois du Roi**
**53, route des Puits**
**F-92420 Vaucresson (FR)**

(74) Mandataire : **Timoney, Ian Charles Craig**
**SOCIETE NATIONALE ELF AQUITAINE**
**Departement Propriété Industrielle Tour Elf**
**Cedex 45**
**F-92078 Paris La Défense (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



Jouve, 18, rue Saint-Denis, 75001 PARIS

## Description

La présente invention se rapporte à un composite actif constitué d'un support comprimé et d'un agent actif vis-à-vis d'un gaz. La présente invention se rapporte également à un procédé de mise en oeuvre de processus physico-chimiques, gaz-solide ou gaz-liquide utilisant comme milieu réactionnel un tel composite actif.

Dans certains domaines comme par exemple celui des pompes à chaleur chimiques basées sur la thermicité de la réaction entre un solide et un gaz, ou de l'adsorption sur un solide d'un gaz, on utilise un mélange d'un matériau divisié, tel que le graphite expansé, et d'un réactif solide, par exemple un sel ou un adsorbant comme une zéolite. Le mélange de graphite expansé et de ce solide, siège d'une réaction chimique ou d'une adsorption physique, présente de nombreux avantages lors d'une réaction chimique ou d'une adsorption physique entre le solide et un gaz. Le graphite expansé se présentant sous forme de feuillets ou de particules feuilletées a une très grande surface spécifique et permet la diffusion du gaz même en milieu confiné.

Le document EP-A-129.473 décrit un procédé de mise en oeuvre de réactions solide-gaz dans lequel on ajoute au milieu réactionnel du graphite expansé de masse volumique comprise entre 0,001 et 0,02 g/cm$^3$ et à une quantité telle qu'elle représente de 1 à 60 % de la quantité de solide réactant présente dans le milieu.

L'amélioration substantielle des cinétiques de réactions solide-gaz renversables observée, comme résultant du mélange du solide actif avec du graphite naturel expansé par voie thermique, dans des proportions massiques données et compactées dans un volume fixé résulte d'une excellente perméabilité du lit fixe ainsi préparé au gaz réactif, et d'une conductivité thermique accompagnée d'un bon coefficient d'échange thermique aux parois. De manière classique, la préparation d'un tel réactif conduit à un lit isotrope homogène dont la conductivité isotrope se situe à des valeurs de 0,5 à 2 $Wm^{-1} K^{-1}$ suivant ls conditions de préparation (proportion et compactage), et dont le coefficient d'échange aux parois se situe entre 50 et 150 $Wm^{-2} K^{-1}$.

Malgré ces avantages, l'utilisation de tels mélanges à l'état granulaire présente des inconvénients du fait de la difficulté à obtenir des mélanges réellement homogènes, de leur manutention difficile et du volume important qu'ils occupent. De plus, le réactif, souvent hygroscopique, a tendance à absorber l'humidité si l'opération de mélange est longue ; une déshydratation ultérieure est longue, voire coûteuse et peut influer sur la qualité du produit final même après déshydratation.

La présente invention a donc pour objet un composite actif se présentant sous forme d'un bloc facilement manipulable et qui, tout en conservant une excellente perméabilité selon une direction, présente des propriétés de transfert de chaleur dans une direction privilégiée.

Pour ce faire, l'invention propose un composite actif constitué d'un support comprimé et d'un agent actif vis-à-vis d'un gaz, caractérisé en ce que le support comprimé comprend du graphite expansé recomprimé ayant une densité comprise entre 0,02 et 1,5, le composite présentant une anisotropie de conductivité thermique, le coefficient d'anisotropie $C_1/C_2$ étant comprise entre 5 et 150, et en ce que le composite a une porosité ouverte comprise entre 32 et 99 % de la porosité totale du composite.

Selon un mode de réalisation préféré, le composite actif comprend de 1 à 95 % en poids de graphite expansé recomprimé et de 99 à 5 % en poids d'agent actif.

L'invention propose également l'utilisation d'un composite actif selon l'invention comme milieu réactionnel. Le composite actif est constitué d'un support comprimé et d'un agent actif vis-à-vis d'un gaz, le support comprimé comprenant du graphite expansé recomprimé ayant une densité comprise entre 0,02 et 1,5, le composite présentant une anisotropie de conductivité thermique, le coefficient d'anisotropie $C_1/C_2$ étant compris entre 5 et 150, et le composite a une porosité ouverte comprise entre 32 et 99 % de la porosité totale du composite.

Un tel bloc de composite actif est destiné à être utilisé pour mettre en oeuvre soit une réaction de type solide-gaz, soit une adsorption entre un gaz et un solide, soit l'absorption d'un gaz dans un liquide, par exemple une solution saturée ou non d'un solide, soit une réaction entre un gaz et un liquide catalysée par un solide, soit le siège d'une condensation/évaporation d'un gaz, soit enfin la réaction de transformation d'un gaz catalysée par un solide. Ainsi, la présente invention propose un procédé de mise en oeuvre soit de réactions du type gaz-solide, soit d'adsorption gaz-solide, soit d'absorption d'un gaz dans un liquide, soit enfin de transformation catalytique d'un gaz en utilisant comme milieu réactionnel un bloc de composite actif selon l'invention.

Le composite actif selon l'invention doit présenter une très forte anisotropie en transferts thermique qui résultera de la compression ordonnée des feuillets de graphite trés bons conducteurs de la chaleur, tout en conservant une grande porosité permettant une bonne diffusion du gaz jusqu'à chaque site actif que l'on dispose sensiblement uniformément dans le composite.

Le composite actif selon l'invention dont la densité est comprise entre 0,02 et 1,5 présente une anisotropie de conductivité thermique importante, c'est-à-dire que la conductivité thermique $C_1$ selon une première direction $D_1$ du composite actif est nettement plus importante que celle $C_2$ obtenue selon une autre direction $D_2$ du composite perpendiculaire à la première. Le composite actif selon l'invention présente un coefficient d'anisotropie, qui est le rapport $C_1/C_2$, compris entre 5 et 150 et de préférence entre 10 et 100.

Par ailleurs, le composite actif selon l'invention doit présenter une certaine porosité permettant aux gaz d'atteindre les sites actifs.

La porosité totale du composite correspond au pourcentage de vide au sein dudit composite qui s'obtient aisément à partir de sa densité mesurée comparée à la densité du graphite naturel : 2,2.

La caractéristique importante du composite est la porosité ouverte représentative de l'accessibilité des liquides et gaz aux sites actifs. Cette porosité ouverte s'exprime en pourcentage de la porosité totale. Elle est déterminée en mesurant la quantité d'eau, maintenue à la pression atmosphérique, absorbée par le bloc auquel on applique une pression de 0,02 Bar, et l'incidence qu'a cette absorption sur la densité du composite.

La porosité ouverte du composite est généralement comprise entre 32 et 99,1 % de sa porosité totale. Dans cet intervalle, elle dépendra dans une large mesure de la densité choisie pour le composite dans l'application envisagée.

D'autres caractéristiques et avantages de la présente invention apparaîtront plus clairement à la lecture de la description suivante, faite en référence aux dessins annexés sur lesquels :

- la figure 1 est une vue en coupe longitudinale d'un appareil destiné à comprimer un matériau pulvérulent, et
- la figure 2 est une vue en coupe longitudinale d'un dispositif destiné à imprégner un matériau pulvérulent comprimé afin de réaliser un composite actif selon l'invention.

Comme représenté sur la figure 1, un appareil destiné à comprimer un matériau pulvérulent afin de former un support poreux comprend un cylindre 10 ayant un fond plat 12. Un piston 14, monté à coulissement étanche dans le cylindre 10, est agencé de façon à être déplaçable dans le sens de la flèche 16.

Le cylindre est préalablement chargé d'une quantité de matériau pulvérulent à comprimer. Dans le présent exemple, le matériau à comprimer est du graphite expansé préparé par exfoliation, de densité initiale comprise entre 0,001 à 0,02, la température d'expansion étant généralement comprise entre 150° et 1200°C. Le graphite expansé est comprimé dans le cylindre 10 par le piston 14 jusqu'à obtenir un support ou bloc de densité et de cohésion désirées. Le bloc de graphite expansé atteint une telle cohésion quand sa densité est supérieure à 0,02. On peut avantageusement comprimer le graphite expansé de façon à avoir une densité entre 0,02 et 1,5.

Dans l'exemple illustré, le bloc de graphite expansé comprimé est un cylindre dont la base peut avoir une forme quelconque, pas nécessairement circulaire ; d'une façon plus générale, il est possible d'obtenir toutes les formes souhaitées autres que cylindriques, soit en combinant plusieurs directions de compression, soit en usinant le bloc qui devra avoir une cohésion suffisante.

Comme représenté sur la figure 2, un dispositif destiné à imprégner le bloc de graphite expansé comprimé comprend une chambre étanche 18 formée dans un cylindre 20 fermé par un couvercle étanche 22. Les dimensions de la chambre 18 sont légèrement supérieures à celles du bloc 24 pour lui permettre de recevoir d'une part le bloc 24 et d'autre part une quantité de produit liquide 26 destiné à imprégner le bloc 24. Si l'agent actif sélectionné est un solide, il faut alors l'introduire dans un liquide convenablement choisi soit par dissolution dans un solvant, soit par broyage très fin et mise en suspension, ce qui permet ainsi de réaliser l'agent liquide d'imprégnation. Le couvercle 22 comporte une ouverture 28 destinée à être reliée à une source de vide (non représentée). La baisse de pression à l'intérieur de l'unité 24 fait pénétrer le produit liquide 26 dans les interstices du milieu poreux ou à l'intérieur des pores accessibles. La pression appliquée à l'ouverture 28 se trouve dans la gamme 0,01 à 0,1 Bar et de préférence 0,02 Bar. Pour un bloc ayant un volume de 3 $dm^3$, la durée d'imprégnation est généralement comprise entre quelques secondes et 1 minute.

Lorsque le solvant utilisé pour l'agent d'imprégnation est l'eau, il est par exemple tout à tait suffisant de faire le vide avec une trompe à eau.

Lorsque l'agent actif est un solide, il est souvent avantageux d'évaporer le liquide intermédiaire qui a servi à réaliser l'agent d'imprégnation, avec toutes les précautions qui permettent de laisser l'agent actif dispersé de façon homogène dans les porosités du support. Ainsi, si ce liquide est de l'eau, le bloc 24 imprégné doit être chauffé dans une étuve dont la température est régulée pour passer de 60 à 100°C pendant une période comprise entre 5 et 24 heures, ce qui permet d'évaporer l'eau de la solution. L'étuve est ensuite portée à une température d'au moins de 200°C de façon à éliminer l'eau de recristallisation, la durée de maintien du bloc à cette température pouvant être comprise entre 1h et 10h.

Ce procédé de conditionnement est utilisable avec de nombreux agents actifs différents tels que ceux proposés par exemple dans le tableau I. Par agent actif, on entend par exemple un solide réactif, un solide adsorbant, un liquide absorbant, ou un solide agissant comme catalyseur.

TABLEAU I

| Nature de l'interaction agent actif-gaz | Agents actifs | Gaz |
|---|---|---|
| Réactions solide-gaz (renversables) | halogénures<br>pseudohalogénures<br>carbonates<br>sulfates<br>nitrates | eau<br>$NH_3$ et dérivés (amines) |
| | oxydes | $CO_2$<br>$SO_2$<br>$SO_3$ |
| | métaux<br>alliages métalliques | O2<br>$H_2$<br>hydrocarbures |
| | hydrures métalliques | $H_2$ |
| Absorption liquide-gaz (renversable) et absorption liquide saturé-gaz (renversables) | solutions aqueuses<br>halogénures<br>pseudo halogénures<br>carbonates<br>sulfates<br>nitrates | eau |
| | solutions dans $NH_3$ liq.<br>halogénures<br>pseudohalogénures<br>carbonates<br>sulfates<br>nitrates | $NH_3$ et dérivés |

| | | |
|---|---|---|
| Adsorption solide-gaz (renversable) | zéolithe<br>charbon actif<br>silicagel<br>oxyde phosphorique | eau<br>méthanol et dérivés |
| Catalyse hétérogène | Ni + $C_6H_6$ | $H_2$ |

Dans le cas des chlorures, le tableau II précise la nature de liquides d'imprégnation solubilisant l'agent actif où le mettant en suspension.

TABLEAU II

| | Liquide d'imprégnation | |
|---|---|---|
| Agent actif | de solubilisation | de suspension |
| $CaCl_2$ | eau ou alcool, acétone | |
| $MnCl_2$ | alcool | éther, $NH_3$ liquide |
| $BaCl_2$ | alcool | |
| $NiCl_2$ | alcool, $NH_4OH$ | $NH_3$ liquide |
| $CuCl_2$ | acétone | |
| $CoCl_2$ | alcool, acétone éther | |
| $SrCl_2$ | alcool, acétone | $NH_3$ liquide |
| NaCl | glycérine | |
| $FeCl_2$ | alcool, acétone | éther |
| $NH_4Cl$ | alcool, $NH_3$ liquide | acétone, éther |
| $CdCl_2$ | alcool | acétone, éther |

EXEMPLES 1 A 4 :

Les caractéristiques de composites actifs selon l'invention seront maintenant étudiées :

Exemple 1 :

- Composite actif comprenant 25 % de graphite, 75 % de $CaCl_2$. Après compression du graphite expansé seul, un bloc de masse volumique 0,2 g $cm^{-3}$ a été obtenu. L'imprégnation par une solution de $CaCl_2$ a été effectuée sous vide ; le bloc a ensuite a été séché à 240°C pour éliminer l'agent d'imprégnation. La conductivité radiale (c'est-à-dire dans le sens perpendiculaire au sens de compression) du bloc de composite actif est de 7 $Wm^{-1}$ $K^{-1}$ alors que sa conductivité axiale (c'est-à-dire dans le sens parallèle

au sens de compression) est inférieure à 1 $Wm^{-1}$ $K^{-1}$. La réactivité de ce matériau vis-à-vis de la méthylamine a été comparée à celle d'un mélange isotrope de $CaCl_2$ avec du graphite expansé réalisé dans les mêmes proportions, et pour les mêmes conditions thermodynamiques. La puissance thermique moyenne sur 90 % de la réaction échangée entre le système et le fluide caloporteur, par unité de volume du composite actif est de 440 kW $m^{-3}$ dans le cas du matériau comprimé imprégné, alors qu'elle est de 180 kW $m^{-3}$ dans le cas du simple mélange physique. La porosité ouverte est de 55 % de la porosité totale du composite.

Exemple 2 :

- Un composite actif comprenant 50 % de graphite, 50 % de $CaCl_2$ est préparé à partir d'un bloc de masse volumique 0,2 g $cm^{-3}$.

La conductivité radiale du bloc de composite actif est de 18 $Wm^{-1}$ $K^{-1}$ et le coefficient de contact est de 860 $Wm^{-2}$ $K^{-1}$.
Dans les mêmes conditions que les précédentes, les puissances massiques sont respectivement de 770 kW $m^{-3}$ et 240 kW $m^{-3}$. La porosité ouverte est de 50 % de la porosité totale du composite.

Exemple 3 :

- Composite actif contenant 40 % de graphite et 60 % de $MnCl_2$ Dans les mêmes conditions que les précédentes, à partir d'un bloc de masse volumique 0,26 g/$cm^3$ réagissant avec l'ammoniac, les puissances massiques sont respectivement de 640 kW $m^{-3}$ et 230 kW $m^{-3}$. La porosité ouverte est de 52 % de la porosité totale du composite.

Exemple 4 :

- Composite actif comprenant 72 % de graphite et 28 % de $CaCl_2$. La conductivité radiale est de 24 $Wm^{-1}$ $K^{-1}$. Dans les mêmes conditions que les exemples précédents, pour un composite actif préparé à partir d'un bloc de graphite de masse volumique de 0,3 g $cm^{-2}$ les puissances massiques sont respectivement 960 $kWm^{-3}$ et 260 $kWm^{-3}$. La porosité ouverte est de 48 % de la porosité totale du composite.

Comme le montrent les exemples, le composite actif selon l'invention a une densité comprise entre 0,02 et 1,5 et présente une anisotropie importante, la conductivité selon une première direction $D_1$ étant plus importante que celle selon une deuxième direction $D_2$ perpendiculaire à la première. Les particules feuilletées de graphite expansé dont les plans qui ont une trés bonne conductivité thermique (> 20 $W.m^{-1}$ $K^{-1}$) sont initialement dans toutes les directions de l'espace et s'ordonnent selon une même direction sous l'action de la compression. Le composite actif a un coefficient d'anisotropie défini par le rapport des conductivités $C_1/C_2$ qui est de 5 à 150 et de préférence entre 10 et 150.

Le composite actif selon l'invention peut comprendre de 1 à 95 % en poids de graphite expansé recomprimé et de 5 à 99 % en poids d'agent actif. Son coefficient de contact est compris entre 500 et 5000 $Wm^{-2}$ $K^{-1}$.

Le graphite expansé recomprimé a une densité comprise entre 0,02 et 1,5 et la porosité ouverte accessible aux liquides ou aux gaz est comprise entre 99,1 % et 32 % de la porosité totale du composite.

Le composite actif selon l'invention peut former le milieu réactionnel d'un procédé de mise en oeuvre de réactions chimiques de type gaz-solide. A titre d'exemple, le gaz est de la méthylamine et le solide du $CaCl_2$. Dans ce cas, la réaction solide-gaz est la suivante :

$$\underset{\text{solide}}{CaCl_2,\ 2\ NH_2CH_3} + \underset{\text{gaz}}{4\ NH_2CH_3} \dashrightarrow \underset{\text{solide}}{CaCl_2,\ 6\ NH_2CH_3} + \Delta H$$

D'autres réactions sont possibles entre des sels du Tableau II soit avec de la méthylamine soit avec de l'amoniac.

Le composite actif selon l'invention peut être utilisé en tout procédé de mise en oeuvre de processus physico-chimiques mettant en oeuvre un gaz et soit un solide réactif, soit un solide adsorbant, soit un liquide absorbant saturé ou non, soit un solide agissant comme catalyseur, soit enfin le siège d'une condensation/évaporation d'un gaz.

## Revendications

1. Composite actif constitué d'un support comprimé et d'un agent actif vis-à-vis d'un gaz, caractérisé en ce que le support comprimé comprend du graphite expansé recomprimé ayant une densité comprise entre 0,02 et 1,5, le composite présentant une anisotropie de conductivité thermique, le coefficient d'anisotropie $C_1/C_2$ étant comprise entre 5 et 150, et en ce que le composite a une porosité ouverte comprise entre 32 et 99 % de la porosité totale du composite.

2. Composite actif selon la revendication 1 caractérisé en ce qu'il comprend de 1 à 95 % en poids de graphite expansé recomprimé et de 99 à 5 % en poids d'agent actif.

3. Utilisation d'un composite actif selon la revendication 1 ou 2 comme milieu réactionnel pour effectuer des processus physico-chimiques mettant en oeuvre un gaz et soit un solide réactif, soit un solide adsorbant, soit un liquide absorbant saturé ou non, soit un solide agissant comme catalyseur, soit le siège d'une condensation/évaporation d'un gaz.

4. Utilisation selon la revendication 3 caractérisé en ce que le solide réactif est un sel.

5. Utilisation selon la revendication 3 caractérisé en ce que l'on utilise un solide adsorbant.

6. Utilisation selon la revendication 3 caractérisé en ce que l'on utilise un liquide absorbant d'un gaz.

7. Utilisation selon la revendication 6 caractérisé en ce que le solide réactif est un métal.

8. Utilisation selon la revendication 3 caractérisé en ce que l'on utilise un solide agissant comme un catalyseur.

9. Utilisation comme milieu réactionnel pour effectuer des processus physico-chimiques gaz-solide ou gaz-liquide d'un composite actif constitué d'un support comprimé et d'un agent actif vis-à-vis d'un gaz, le support comprimé comprenant du graphite expansé recomprimé ayant une densité comprise entre 0,02 et 1,5, le composite présentant une anisotropie de conductivité thermique, le coefficient d'anisotropie $C_1/C_2$ étant comprise entre 5 et 150, et en ce que le composite a une porosité ouverte comprise entre 32 et 99 % de la porosité totale du composite.

10. Utilisation selon la revendication 9 caractérisé en ce que l'agent actif est un sel.

11. Utilisation selon la revendication 9 caractérisé en ce que l'agent actif est un solide adsorbant.

12. Utilisation selon la revendication 9 caractérisé en ce que l'agent actif est un liquide absorbant d'un gaz.

13. Utilisation selon la revendication 9 caractérisé en ce que l'agent actif est un métal.

## Patentansprüche

1. Aktiver Verbundstoff, bestehend aus einem komprimierten Träger und einem gegenüber einem Gas aktiven Mittel, dadurch **gekennzeichnet,** daß der komprimierte Träger geblähten und erneut zusammengeprellter- Graphit mit einer Dichte zwischen 0,02 und 1,5 umfallt, der Verbundstoff anisotrope Wärmeleitfähigkeit aufweist, wobei der Anisotropiekoeffizient $C_1/C_2$ zwischen 5 und 150 beträgt und der Verbundstoff eine Offenporigkeit zwischen 32 und 99 % der Gesamtporigkeit des Verbundstoffs aufweist.

2. Verbundstoff nach Anspruch 1, dadurch **gekennzeichnet,** daß er 1 bis 95 Gew.-% geblähten und erneut zusammengeprellten Graphit und 99 bis 5 Gew.-% aktives Mittel umfallt.

3. Verwendung eines aktiven Verbundstoffs nach Anspruch 1 oder 2 als Reaktionsmedium zur Durchführung von physiko-chemischen Prozessen unter Verwendung eines Gases und entweder eines festen Reagens oder eines festen Adsorbens oder eines gegebenenfalls gesättigten flüssigen Absorbens oder eines als Katalysator wirkenden Feststoffs oder der Stelle der Kondensation bzw. Verdampfung eines Gases.

4. Verwendung nach Anspruch 3, dadurch **gekennzeichnet,** daß das feste Reagens ein Salz ist.

5. Verwendung nach Anspruch 3, dadurch **gekennzeichnet,** daß man ein festes Adsorbens verwendet.

6. Verwendung nach Anspruch 3, dadurch **gekennzeichnet,** daß man eine gasabsorbierende Flüssigkeit verwendet.

7. Verwendung nach Anspruch 6, dadurch **gekennzeichnet,** daß das feste Reagens ein Metall ist

8. Verwendung nach Anspruch 3, dadurch **gekennzeichnet,** daß man einen als Katalysator wirkenden Feststoff verwendet.

9. Verwendung eines aktiven Verbundstoffs, bestehend aus einem komprimierten Träger und einem gegenüber einem Gas aktiven Mittel, wobei der komprimierte Träger geblähten und erneut zusammengepreßten Graphit mit einer Dichte zwischen 0,02 und 1,5 umfallt, der Verbundstoff anisoptrope Wärmeleitfähigkeit aufweist, wobei der Anisotropiekoeffizient $C_1/C_2$ zwischen 5 und 150 beträgt und der Verbundstoff eine Offenporigkeit zwischen 32 und 99 % der Gesamtporigkeit des Verbundstoffs aufweist, als Reaktionsmedium zur Durchführung von physiko-chemischen Prozessen auf der Basis von Reaktionen zwischen Gasen und Feststoffen oder zwischen Gasen und Flüssigkeiten.

10. Verwendung nach Anspruch 9, dadurch **gekennzeichnet,** daß das aktive Mittel ein Salz ist.

11. Verwendung nach Anspruch 9, dadurch **gekennzeichnet,** daß das aktive Mittel ein festes Adsorbens ist.

12. Verwendung nach Anspruch 9, dadurch **gekennzeichnet,** daß das aktive Mittel eine gasabsorbierende Flüssigkeit ist.

13. Verwendung nach Anspruch 9, dadurch **gekennzeichnet,** daß das aktive Mittel ein Metall ist.

## Claims

1. Active composite consisting of a compressed support and of an agent that is active in relative to a gas, characterised in that the compressed support comprises recompressed expanded graphite having a density of between 0.02 and 1.5, the composite having an anisotropy of thermal conductivity, the coefficient of anisotropy $C_1/C_2$ being between 5 and 150; and in that the composite has an open pore structure of between 32 and 99% of the total porosity of the composite.

2. Active composite according to Claim 1, characterised in that it comprises from 1 to 95% by weight of recompressed expanded graphite and from 99 to 5% by weight of active agent.

3. Use of an active composite according to Claim 1 or 2 as a reactive medium for performing physico-chemical processes using a gas and a reactive solid, an adsorbent solid, a saturated or unsaturated absorbent liquid, a solid acting as a catalyst, or the seat of condensation/evaporation of a gas.

4. Use according to Claim 3, characterised in that the reactive solid is a salt.

5. Use according to Claim 3, characterised in that an adsorbent solid is used.

6. Use according to Claim 3, characterised in that a liquid which absorbs a gas is used.

7. Use according to Claim 6, characterised in that the reactive solid is a metal.

8. Use according to Claim 3, characterised in that a solid acting as a catalyst is used.

9. Use of an active composite consisting of a compressed support and an agent that is active relative to a gas for performing gas-solid or gas-liquid physico-chemical processes, the compressed support comprising recompressed expanded graphite having a density of between 0.02 and 1.5, the composite having an anisotropy of thermal conductivity, the coefficient of anisotropy $C_1/C_2$ being between 5 and 150; and in that the composite has an open pore structure of between 32 and 99% of the total porosity of the composite.

**10.** Use according to Claim 9, characterised in that the active agent is a salt.

**11.** Use according to Claim 9, characterised in that the active agent is an adsorbent solid.

**12.** Use according to Claim 9, characterised in that the active agent is a liquid which absorbs a gas.

**13.** Use according to Claim 9, characterised in that the active agent is a metal.

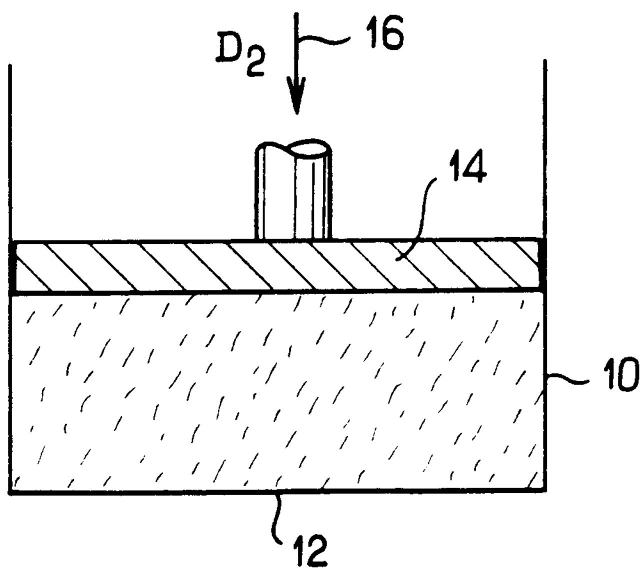


FIG_1

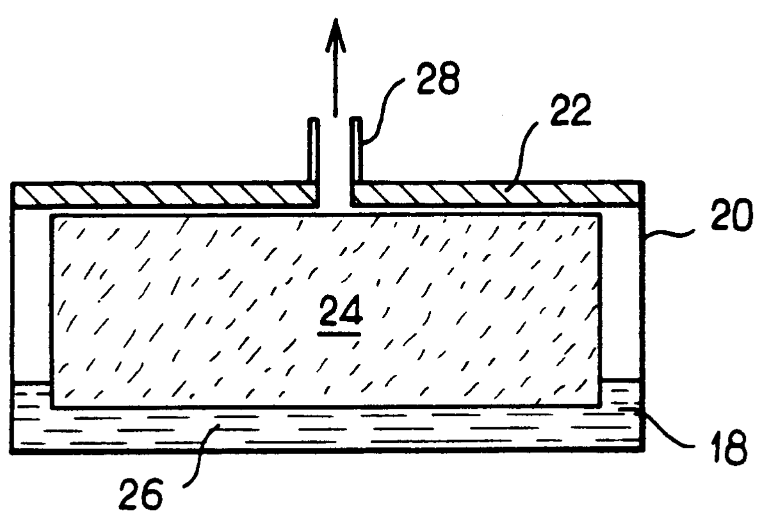


FIG_2